# EUROPÄISCHE PATENTSCHRIFT

(11) **EP 3 625 532 B1**
(45) Veröffentlichungstag und Bekanntmachung des Hinweises auf die Patenterteilung: **07.07.2021**
(21) Anmeldenummer: 18718443.7
(22) Anmeldetag: 18.04.2018
(51) Int. Cl.: G01M 13/02, G01M 13/04

(54) **PRÜFSTANDANORDNUNG ZUR PRÜFUNG EINER LAMELLENKUPPLUNG**
TEST BENCH ARRANGEMENT FOR TESTING A MULTI-PLATE CLUTCH
SYSTÈME DE BANC D'ESSAI POUR CONTRÔLER UN EMBRAYAGE MULTIDISQUE

(30) Priorität: 17.05.2017 DE 102017208311
(43) Veröffentlichungstag der Anmeldung: 25.03.2020
(73) Patentinhaber: ZF Friedrichshafen AG, 88046 Friedrichshafen (DE)
(72) Erfinder: EISENBEISS, Jens, 94081 Fuerstenzell (DE)
(74) Vertreter: ZF Friedrichshafen AG
(86) Internationale Anmeldenummer: PCT/EP2018/059803
(87) Internationale Veröffentlichungsnummer: WO 2018/210512

(56) Entgegenhaltungen:
- DE-A1-102010 011 158
- DE-A1-102010 055 573
- DE-A1-102015 209 915

## Beschreibung

Die Erfindung betrifft eine Prüfstandanordnung zur Prüfung einer Lamellenkupplung mit den Merkmalen des Oberbegriffs des Anspruchs 1.

Reiblamellenpakete von Kupplungen und Bremsen werden beispielsieweise in Automatikgetrieben verwendet. Bei Kupplungsprüfständen für derartige Kupplungen, sind die Reiblamellen in der Prüfkammer an sogenannten Innen- und Außenlamellenträger aufgenommen. In derartigen Prüfständen wird das Lamellenpaket in der Prüfkammer einer Prüfung unterzogen, bei der sowohl die Innen- als auch die Außenlamellenträger in Drehung versetzt werden.

Die bekannten Prüfstandkonzepte für die Prüfung der Kupplungen haben gemeinsam, dass eine Drehmomentmessung an der Eingangs- und/oder an der Ausgangsseite der Kupplung mit der Reibung der Wälzlager des Prüfstandes als Störgröße behaftet ist. Die Wälzlagerreibung unterliegt starken Veränderungen und ist abhängig von einer Anzahl von Einflussfaktoren wie u.a. Drehzahl, äußere Belastung und Widerstand des Schmierstoffs.

Die Druckschrift, DE102014213220A1 offenbart eine Prüfstandanordnung zum Prüfen eines Lamellenschaltelementes, mit einem Prüfstandgestell mit einem Antrieb zum Erzeugen einer Relativbewegung zwischen Lamellenträgern des Lamellenschaltelementes und mit einer Verstelleinrichtung zum Öffnen und Schließen des Lamellenschaltelementes, wobei ein erster Lamellenträger direkt mit der Antriebswelle des Antriebes verbunden ist und dass ein zweiter Lamellenträger drehfest über ein Sensorelement zumindest zum Erfassen eines Drehmomentes an dem Prüfstandgestell abgestützt ist.

Aus der DE 10 2020 011 158 A1 ist ein Lagerprüfstand zur Ermittlung der Reibungskräfte für dynamisch belastete Lager bekannt. Der Lagerprüfstand umfasst eine angetriebene Prüfwelle und ein Prüflager in einer Lageraufnahme. Über einen äußeren Belastungsring kann eine vorbestimmte Kraft zur Erzeugung eines Reibungsmoments zwischen Prüfwelle und Prüflager auf das Prüflager wirken. Zur Ermittlung der auftretenden Reibungskräfte steht eine Kraftmessdose über einen Abstützhebel mit der Lageraufnahme in Wirkverbindung.

Aus der DE 10 2015 209 915 A1 ist ein Kupplungsprüfstand zum Prüfen einer Kupplung mit einem Lamellenpaket bekannt. Der Kupplungsprüfstand umfasst eine erste und eine zweite angetriebene Welle, die zueinander koaxial angeordnet sind und jeweils mit einem Lamellenträger des in einer Prüfkammer angeordneten Lamellenpakets der Kupplung verbunden sind. Die erste und die zweite Welle sind in einem gemeinsamen und gehäusefesten Lagerelement gelagert.

Die DE 10 2010 055 573 A1 zeigt einen Prüfstand zur Ermittlung des Schleppmoments einer Lamellenkupplung. Der Prüfstand umfasst eine erste Aufnahmeeinrichtung, die drehfest mit dem einen Lamellenpaket verbindbar ist und eine zweite Aufnahmeeinrichtung, die drehfest mit dem anderen Lamellenpaket verbindbar ist, wobei die erste und die zweite Aufnahmeeinrichtung durch eine Antriebseinrichtung zueinander drehbar sind. Über eine Messeinrichtung kann ein Schleppmoment zwischen den Lamellenpaketen gemessen werden.

Der Erfindung liegt die Aufgabe zugrunde, eine Prüfstandanordnung zur Prüfung einer Lamellenkupplung vorzuschlagen, welche eine verbesserte Prüfgenauigkeit aufweist. Diese Aufgabe wird durch eine Prüfstandanordnung mit den Merkmalen des Anspruchs 1 gelöst.

Bevorzugte oder vorteilhafte Ausführungsformen der Erfindung ergeben sich aus den Unteransprüchen, der nachfolgenden Beschreibung und/oder den beigefügten Figuren.

Gegenstand der Erfindung ist eine Prüfstandanordnung, welche für eine Lamellenkupplung ausgebildet und/oder geeignet ist. Insbesondere dient die Prüfstandanordnung dazu einen Betrieb der Lamellenkupplung zu simulieren und somit das Verhalten, beispielsweise tribologische Eigenschaften, der Lamellenkupplung zu ermitteln. Vorzugsweise hat die Prüfstandanordnung die Funktion ein Schleppmoment der Lamellenkupplung zu erfassen.

Die Prüfstandanordnung weist eine Kupplungseinheit auf, wobei die Kupplungseinheit einen ersten Lamellenträger und einen zweiten Lamellenträger aufweist. Insbesondere kann die Kupplungseinheit als eine Prüfkammer ausgebildet sein, wobei der erste und der zweite Lamellenträger innerhalb der Prüfkammer angeordnet sind. Beispielsweise ist die Prüfkammer mit einem Öl befüllt und öldicht abgeschlossen. Vorzugsweise ist der erste Lamellenträger als ein Innenlamellenträger zur Aufnahme von Innenlamellen und der zweite Lamellenträger als ein Außenlamellenträger zur Aufnahme von Außenlamellen ausgebildet, wobei insbesondere die Außen- und die Innenlamellen abwechselnd ineinandergreifen bzw. abwechselnd hintereinander angeordnet sind. Alternativ kann jedoch auch der erste Lamellenträger als der Außenlamellenträger und der zweite Lamellenträger als der Innenlamellenträger ausgebildet sein.

Der erste Lamellenträger ist relativ zu dem zweiten Lamellenträger bewegbar. Insbesondere rotieren der erste und/oder der zweite Lamellenträger während eines Betriebes der Prüfstandanordnung in Umlaufrichtung um eine Drehachse. Vorzugsweise rotieren der erste und/oder der zweite Lamellenträger in einem geöffneten Zustand der Kupplungseinheit im Leerlauf, wobei insbesondere ein Leerlaufmoment bzw. ein Schleppmoment erzeugt ist.

Optional ergänzend sind der erste und/oder der zweite Lamellenträger in axialer Richtung in Bezug auf die Drehachse relativ zueinander verschiebbar, sodass die Kupplungseinheit geöffnet oder geschlossen wird. Vorzugsweise sind die beiden Lamellenträger in einem geschlossenen Zustand der Kupplungseinheit in Umlaufrichtung in Bezug auf die Drehachse, im Speziellen reibschlüssig, miteinander verbunden, wobei insbesondere ein Lastmoment erzeugt ist.

Die Prüfstandanordnung weist einen Antriebsabschnitt auf, wobei der Antriebsabschnitt eine Antriebseinrichtung zur Erzeugung der Relativbewegung zwischen dem ersten und dem zweiten Lamellenträger aufweist. Insbesondere erzeugt die Antriebseinrichtung eine Antriebsmoment bzw. eine Drehbewegung, sodass der erste und/oder der zweite Lamellenträger um die Drehachse rotieren. Vorzugsweise ist die Antriebseinrichtung als eine Antriebsmotor, beispielsweise als ein Elektromotor, ausgebildet.

Der Antriebsabschnitt weist eine erste angetriebene Welle auf, wobei der erste Lamellenträger über die erste Welle antriebstechnisch mit der Antriebseinrichtung verbunden ist. Insbesondere wird über die erste Welle das Antriebsmoment der Antriebseinrichtung auf den ersten Lamellenträger übertragen, sodass in dem geöffneten Zustand der Kupplungseinheit das Leerlaufmoment an dem ersten Lamellenträger anliegt und in dem geschlossenen Zustand der Kupplungseinheit das Lastmoment auf den zweiten Lamellenträger übertragen wird. Vorzugsweise ist die erste Welle drehfest mit dem ersten Lamellenträger verbunden.

Optional ergänzend kann der Antriebsabschnitt mindestens eine Ausgleichskupplung und/oder mindestens einen Drehmomentsensor aufweisen. Die Ausgleichskupplung und/oder der Drehmomentsensor sind dabei zwischen der ersten Welle und der Antriebseinrichtung angeordnet, wobei insbesondere die Antriebseinrichtung über die Ausgleichskupplung mit der ersten Welle gekoppelt ist. Vorzugsweise dient der Drehmomentsensor zur Erfassung des Antriebsmoments.

Der Antriebsabschnitt weist mindestens eine erste Lagereinrichtung zur Lagerung der ersten Welle auf, wobei die erste Welle durch die erste Lagereinrichtung drehbar gelagert ist. Insbesondere ist die erste Lagereinrichtung als ein Wälzlager, vorzugsweise ein Radiallager oder ein Schräglager, ausgebildet.

Im Rahmen der Erfindung weist die Prüfstandanordnung eine Messeinheit zur Bestimmung eines Reibmoments der ersten Lagereinrichtung auf. Insbesondere weist die Prüfstandanordnung eine Auswerteeinrichtung auf, wobei die Messeinheit und/oder der Drehmomentsensor mit der Auswerteeinrichtung signaltechnisch verbunden sind. Über die Auswerteeinrichtung kann beispielsweise das Reibmoment von dem Antriebsmoment abgezogen werden, sodass das genaue Drehmoment, insbesondere das Schleppmoment bzw. das Leerlaufmoment bzw. das Lastmoment, der Kupplungseinheit, insbesondere am ersten bzw. dem zweiten Lamellenträger, ermittelbar ist.

Der Vorteil der Erfindung besteht darin, dass durch die Erfassung des Reibmoments der Lagereinrichtung eine hochgenaue Messung kleiner Drehmomente, insbesondere des Schleppmoments, erfolgen kann. Durch die genaue Erfassung des Reibmoments kann somit die Prüfgenauigkeit deutlich verbessert werden, wobei insbesondere das Reibmoment bei der Bestimmung des Schleppmoments bzw. des Leerlaufmoments von dem Antriebsmoment abgezogen wird.

In einer bevorzugten Ausgestaltung der Erfindung weist die Messeinheit eine Sensoreinrichtung und eine koaxial zu der angetriebenen Welle angeordnete Hohlmesswelle zur Übertragung des Reibmoments von der Lagereinrichtung auf die Sensoreinrichtung auf. Insbesondere ist die Sensoreinrichtung zur Erfassung des Reibmoments oder einer Ersatzmessgröße ausgebildet. Prinzipiell kann die Sensoreinrichtung als ein weiterer Drehmomentsensor ausgebildet sein, welcher beispielsweise mit der Hohlmesswelle verbunden ist. Bevorzugt jedoch ist die Sensoreinrichtung als ein Kraftsensor ausgebildet, wobei insbesondere bei einer Rotation der Hohlmesswelle in Umlaufrichtung um die Drehachse eine Kraft, als die Ersatzmessgröße, in Umlaufrichtung auf die Sensoreinrichtung wirkt und durch die Sensoreinrichtung erfasst wird. Insbesondere ist die Sensoreinrichtung mit der Auswerteeinrichtung verbunden, wobei im Speziellen die Auswerteeinrichtung auf Basis der Ersatzmessgröße das Reibmoment der Lagereinrichtung ermittelt.

Die Hohlmesswelle ist an einer ersten radialen Seite durch die erste Lagereinrichtung und an einer zweiten radialen Seite durch ein Fluidlager gelagert. Insbesondere weist die erste Lagereinrichtung mindestens einen Innenring und mindestens einen Außenring auf. Der Innenring ist vorzugsweise an einem Außenumfang der ersten Welle und der Außenring an einem Innenumfang der Hohlmesswelle angeordnet. Insbesondere wird durch das Fluidlager ein Fluidfilm erzeugt, welcher in einem Lagerspalt zwischen der Hohlmesswelle und einem gehäusefesten Lagerblock erzeugt ist. Bevorzugt wird der Fluidfilm pneumatisch oder hydraulisch erzeugt. Insbesondere ist der Lagerblock als ein Hohlzylinder ausgebildet, wobei der Lagerblock die Hohlmesswelle koaxial zumindest abschnittsweise umschließt.

Da das Fluidlager bei Drehzahl null reibungsfrei arbeitet, kann somit eine präzise Erfassung des Reibmoments bzw. der Reibung der Lagereinrichtung ermittelt werden. Ein weiterer Vorteil besteht insbesondere in den guten Dämpfungseigenschaften des Fluidlagers, sodass die Prüfstandanordnung, insbesondere der Antriebsabschnitt, ein verbessertes Betriebsverhalten aufweist.

In einer bevorzugte Ausführung der Erfindung ist das Fluidlager als ein hydrostatisches Gleitlager ausgebildet. Das Fluidlager kann eine Pumpeinrichtung zur Erzeugung eines aktiven Fluidkreislaufs aufweisen. Beispielsweise ist der Fluidfilm als ein Schmierstofffilm ausgebildet. Insbesondere weist der Lagerblock in axialer Richtung und/oder in Umlaufrichtung in Bezug auf die Drehachse mehrere Einlasskanäle und Fluidkammern auf. Insbesondere sind die Fluidkammern als Schmiermitteltaschen ausgebildet. Das Schmiermittel wird vorzugsweise über die Pumpeinrichtung durch die Einlasskanäle in die Schmiermitteltaschen und somit in den Lagerspalt gepresst, sodass die Hohlmesswelle und der Lagerblock stets durch einen dünnen Schmiermittelfilm voneinander getrennt sind.

Alternativ ist das Fluidlager als ein aerostatisches Gleitlager ausgebildet. Das Fluidlager kann eine Kompressoreinrichtung zur Erzeugung eines Luftpolsters aufweisen. Insbesondere ist das Fluidlager als ein Düsenluftlager oder ein Sinterluftlager ausgebildet. Beispielsweise ist der Fluidfilm als ein Luftfilm ausgebildet. Im Speziellen können die Fluidkammern als Luftkammern ausgebildet sein. Die Luftkammern dienen beispielsweise dazu die Luft gleichmäßig zu verteilen und/oder den Druck im Lagerspalt zu erhöhen. Die Druckluft wird vorzugsweise über die Kompressoreinrichtung durch die Einlasskanäle und im Speziellen über die Luftkammern in den Lagerspalt gepresst, sodass die Hohlmesswelle und der Lagerblock stets durch einen dünnen Luftfilm voneinander getrennt sind.

In einer weiteren konstruktiven Umsetzung weist die Hohlmesswelle einen Hebelarm auf. Insbesondere ist der Hebelarm biegesteif ausgebildet und erstreckt sich in radialer Richtung in Bezug auf die Drehachse nach außen hin. Der Hebelarm ist vorzugsweise drehfest mit der Hohlwelle verbunden, sodass das Reibmoment der Lagereinrichtung unmittelbar von der Hohlmesswelle auf den Hebelarm übertragbar ist.

Der Hebelarm stützt sich in Umlaufrichtung um die Drehachse an der Sensoreinrichtung ab, sodass eine Verdrehung der Hohlmessewelle in Umlaufrichtung verhindert ist und das erste Reibmoment auf die Sensoreinrichtung übertragbar ist. Insbesondere wird bei Rotation der Hohlmesswelle in Umlaufrichtung um die Drehachse eine Zugkraft- und/oder eine Druckkraft über den Hebelarm auf die Sensoreinrichtung übertragen, sodass beispielsweise auf Basis der ermittelten Kraft das Reibmoment ermittelbar ist.

In einer ersten Ausführungsform ist der zweite Lamellenträger, wobei bei einer Betätigung der Kupplungseinheit ein Bremsbetrieb simulierbar ist. Insbesondere rotiert der erste Lamellenträger während des Betriebs um die Drehachse wobei der zweite Lamellenträger relativ zu dem zweiten Lamellenträger stationär verbleibt. Insbesondere ist der zweite Lamellenträger drehfest mit einem Gehäuse der Prüfstandanordnung verbunden. Während eines Schließvorgangs der Kupplungseinheit kontaktiert der zweite mit dem ersten Lamellenträger, sodass über den Reibschluss der erste Lamellenträger abgebremst wird.

In einer zweiten Ausführungsform weist die Prüfstandanordnung einen Abtriebsabschnitt auf, wobei der Abtriebsabschnitt eine Abtriebseinrichtung, eine zweite angetriebene Welle und mindestens eine zweite Lagereinrichtung zur Lagerung der zweiten Welle aufweist. Insbesondere ist die Abtriebseinrichtung als ein Abtriebsmotor ausgebildet.

Der zweite Lamellenträger ist über die zweite Welle antriebstechnisch mit der Abtriebseinrichtung verbunden. Insbesondere wird über die zweite Welle ein Abtriebsmoment bzw. das Lastmoment zwischen dem zweiten Lamellenträger und der Abtriebseinrichtung übertragen.

Die zweite Welle ist durch die zweite Lagereinrichtung drehbar gelagert, wobei bei einer Betätigung der Kupplungseinheit ein Kupplungsbetrieb simulierbar ist. Kupplungsbetrieb bedeutet, dass Antrieb und Abtrieb der Kupplung drehbar sind. Ist im Kupplungsbetrieb die Kupplungseinheit geschlossen, so werden die Antriebseinrichtung und die Abtriebseinrichtung auf die gleiche Drehzahl synchronisiert. Insbesondere ist die zweite Lagereinrichtung als ein Wälzlager, vorzugsweise ein Radiallager oder ein Schräglager, ausgebildet.

Optional ergänzend kann der Abtriebsabschnitt eine weitere Ausgleichskupplung und/oder einen weiteren Drehmomentsensor aufweisen. Die weitere Ausgleichskupplung und/oder der weitere Drehmomentsensor sind dabei zwischen der zweiten Welle und der Abtriebseinrichtung angeordnet, wobei insbesondere die Abtriebseinrichtung über die weitere Ausgleichskupplung mit der zweiten Welle gekoppelt ist. Vorzugsweise dient der weitere Drehmomentsensor zur Erfassung des Abtriebsmoments.

In einer ersten konkreten Umsetzung sind der Antriebsabschnitt und der Abtriebsabschnitt in axialer Richtung hintereinander angeordnet, wobei die Kupplungseinheit in axialer Richtung zwischen dem Antriebsabschnitt und dem Abtriebsabschnitt angeordnet ist. Insbesondere sind der Antriebs- und der Abtriebsabschnitt in axialer Richtung gesehen grob betrachtet spiegelsymmetrisch aufgebaut, wobei die erste und die zweite Welle vorzugsweise auf einer gemeinsamen Drehachse liegen. Die Kupplungseinheit ist somit in axialer Richtung gesehen zwischen der ersten und der zweiten Welle angeordnet. Besonders bevorzugt sind die beiden Wellen als Vollwellen ausgebildet. Im Speziellen sind der erste und der zweite Lamellenträger in axialer Richtung in Bezug auf die Drehachse zueinander gegengerichtet. Diese Anordnungsweise wird als dual-side oder als Strangaufbau bezeichnet.

In einer weiteren Ausgestaltung weist der Abtriebsabschnitt eine Mitnahmeeinrichtung auf. Insbesondere ist die Mitnahmeeinrichtung als ein Mitnehmer ausgebildet, wobei der zweite Lamellenträger über die Mitnahmeeinrichtung mit der zweiten Welle koppelbar oder entkoppelbar ist. Insbesondere hat die Mitnahmeeinrichtung die Funktion eine Drehbewegung bzw. das Abtriebsmoment zwischen der zweiten Welle und dem zweiten Lamellenträger zu übertragen.

Der erste und der zweite Lamellenträger sind dem Antriebsabschnitt zugeordnet und die Mitnahmeeinrichtung ist dem Abtriebsabschnitt zugeordnet. Die Mitnahmeeinrichtung ist vorzugsweise drehfest mit der zweiten Welle verbunden. Insbesondere sind der erste und der zweite Lamellenträger in axialer Richtung in Bezug auf die Drehachse gleichgerichtet. Diese Anordnungsweise wird als single-side oder als single-ended bezeichnet, wobei bei dieser Anordnungsweise der erste und der zweite Lamellenträger von einer Seite her zugänglich sind.

In einer zweiten konkreten Umsetzung sind der Antriebsabschnitt und der Abtriebsabschnitt in axialer Richtung auf einer gemeinsamen Seite der Kupplungseinheit angeordnet sind. Insbesondere findet die Abstützung des ersten und des zweiten Lamellenträgers auf einer Seite statt. Vorzugsweise sind die beiden Wellen mit der gleichen axialen Seite an dem entsprechenden Lamellenträger angeordnet. Diese Anordnungsweise wird ebenfalls als single-side oder als single-ended bezeichnet.

In einer konstruktiven Umsetzung der Erfindung ist die erste Welle als eine Vollwelle und die zweite Welle als eine Hohlwelle ausgebildet ist, wobei die beiden Wellen koaxial, insbesondere in Bezug auf die Drehachse, zueinander angeordnet sind. Die beiden Wellen sind in radialer Richtung voneinander beabstandet, wobei die Messeinheit zwischen der ersten und der zweiten Welle angeordnet ist. Insbesondere erstrecken sich die erste Welle und/oder der Lagerblock in axialer Richtung zumindest abschnittsweise innerhalb der zweiten Welle, sodass der Lagerblock von der radial äußeren Welle, also der zweiten Welle, koaxial zumindest abschnittweise umschlossen ist. Die zweite Welle kann beispielsweise in radialer Richtung durch die zweite Lagereinrichtung und/oder das Fluidlager gelagert sein. Vorzugsweise stützt sich die zweite Welle in radialer Richtung über die zweite Lagereinrichtung an einer radialen Außenseite des Lagerblocks und/oder einer radialen Innenseite des Gehäuses ab.

In einer weiteren Ausgestaltung der Erfindung weist die Prüfstandanordnung eine Betätigungsvorrichtung zur Betätigung der Kupplungseinheit auf. Durch die Betätigungsvorrichtung ist eine Kraft in axialer Richtung auf den ersten und/oder den zweiten Lamellenträger erzeugbar, sodass die Kupplungseinheit betätigbar und/oder ein Lüftspiel zwischen den beiden Lamellenträgern einstellbar ist. Die Betätigungsvorrichtung kann dem Antriebsabschnitt und/oder dem Abtriebsabschnitt zugeordnet sein. Alternativ kann die Betätigungsvorrichtung an einer dem Antriebsabschnitt und/oder dem Abtriebsabschnitt gegenüberliegenden Seite der Kupplungseinheit angeordnet sein.

In einer weiteren Konkretisierung der Erfindung weist die Betätigungsvorrichtung einen Aktuator, eine dritte Lagereinrichtung und ein Übertragungselement auf. Der Aktuator ist über die Lagereinrichtung mit dem Übertragungselement verbunden, wobei der Aktuator das Übertragungselement in axialer Richtung, insbesondere in Bezug auf Drehachse, bewegt und/oder mit einer Axialkraft beaufschlagt. Vorzugsweise liegt das Übertragungselement an dem ersten oder dem zweiten Lamellenträger, im Speziellen an den Innen- oder Außenlamellen, an. Durch die Bewegung des Übertragungselements in axialer Richtung werden die beiden Lamellenträger zusammengepresst, sodass der Reibschluss zwischen den Außenlamellen und den Innenlamellen erzeugt ist. Bevorzugt ist der Aktuator als ein Hydraulikzylinder oder ein Elektromotor mit einer Gewindespindel oder als ein elektrischer Linearmotor ausgebildet.

Die dritte Lagereinrichtung ist als ein Wälzlager, vorzugsweise als ein Axiallager oder ein Schräglager, ausgebildet. Durch die zusätzliche Lagerung des Übertragungselements, kann das Übertragungselement in Umlaufrichtung während des Betriebes rotieren, während der Aktuator nicht rotiert bzw. in Umlaufrichtung entkoppelt ist.

In einer weiteren konkreten Umsetzung der Erfindung weist der Abtriebsabschnitt eine Getriebeeinrichtung auf, wobei die Getriebeeinrichtung antriebstechnisch zwischen der Abtriebseinrichtung und der zweiten Welle angeordnet ist. Insbesondere ist die Abtriebseinrichtung achsparallel zu der zweiten Welle angeordnet, wobei das Abtriebsmoment über die Getriebeeinrichtung auf die zweite Welle übertragen wird. Bevorzugt ist die Getriebeeinrichtung als ein Zugmittelgetriebe, vorzugsweise ein Riementrieb oder ein Kettentrieb, oder als ein Reibradgetriebe oder als ein Zahnradgetriebe ausgebildet.

In einer alternativen konkreten Umsetzung ist die Abtriebseinrichtung als ein Hohlwellenmotor ausgebildet ist, wobei die zweite Welle als eine Antriebshohlwelle des Hohlwellenmotors ausgebildet ist. Insbesondere ist die Abtriebseinrichtung koaxial und/oder konzentrisch in Bezug auf die Drehachse zu der zweiten Welle angeordnet.

In einer Weiterbildung der Erfindung weist die Prüfstandanordnung eine weitere Messeinheit zur Erfassung eines zweiten Reibmoments der zweiten Lagereinrichtung auf. Die zweite Messeinheit ist dabei gleich der ersten Messeinheit aufgebaut. Insbesondere weist der Abtriebsabschnitt die zweite Messeinheit auf.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: in einer Schnittdarstellung eine Prüfstandanordnung zur Prüfung einer Kupplungseinheit als ein erstes Ausführungsbeispiel der Erfindung;
- Figur 2: die Prüfstandanordnung in gleicher Darstellung wie in Figur 1 als ein zweites Ausführungsbeispiel der Erfindung;
- Figur 3: die Prüfstandanordnung in gleicher Darstellung wie in Figur 1 als ein drittes Ausführungsbeispiel der Erfindung;
- Figur 4: die Prüfstandanordnung in gleicher Darstellung wie in Figur 1 als ein viertes Ausführungsbeispiel der Erfindung;
- Figur 5: die Prüfstandanordnung in gleicher Darstellung wie in Figur 1 als ein fünftes Ausführungsbeispiel der Erfindung.

Einander entsprechende oder gleiche Teile sind in den Figuren jeweils mit den gleichen Bezugszeichen versehen.

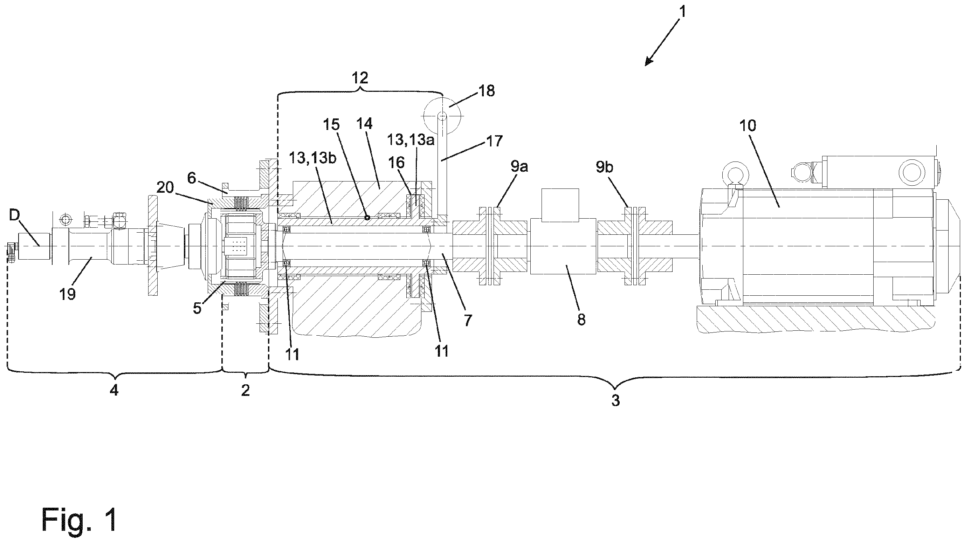

Figur 1 zeigt in einer Schnittdarstellung eine Prüfstandanordnung 1 mit Bremsbetrieb zur Prüfung einer Kupplungseinheit 2, insbesondere einer Reiblamellenkupplung mit einem Lamellenpaket, als ein erstes Ausführungsbeispiel der Erfindung.

Unabhängig der Ausführungsvarianten umfasst die erfindungsgemäße Prüfstandanordnung 1 einen Antriebsabschnitt 3 zum Antrieb der Kupplungseinheit 2 sowie eine Betätigungsvorrichtung 4 zur Betätigung der Kupplungseinheit 2 auf. Die Kupplungseinheit 2 weist einen ersten Lamellenträger 5 und einen zweiten Lamellenträger 6 auf. Der erste Lamellenträger 5 ist als ein Innenlamellenträger und der zweite Lamellenträger 6 als ein Außenlamellenträger ausgebildet. Beispielsweise sind die beiden Lamellenträger 5, 6 in einer mit Öl befüllten Prüfkammer angeordnet. Die beiden Lamellenträger 5, 6 sind koaxial und/oder konzentrisch zueinander in Bezug auf eine Drehachse D angeordnet und relativ in axialer Richtung und/oder in Umlaufrichtung zueinander bewegbar.

Der erste Lamellenträger 5 rotiert in einem geöffneten Zustand der Kupplungseinheit 2 im Leerlauf um die Drehachse D, wobei insbesondere ein Leerlaufmoment bzw. ein Schleppmoment erzeugt ist. Vorzugsweise sind die beiden Lamellenträger 5, 6 in einem geschlossenen Zustand der Kupplungseinheit 2 in Umlaufrichtung in Bezug auf die Drehachse D, im Speziellen reibschlüssig, miteinander verbunden, wobei insbesondere ein Lastmoment erzeugt ist.

Der Antriebsabschnitt 3 weist eine erste Welle 7, einen Drehmomentsensor 8, eine erste und eine zweite Ausgleichskupplung 9a, b sowie eine Antriebseinrichtung 10 auf. Beispielsweise ist die Antriebseinrichtung 10 als ein Elektromotor ausgebildet. Die erste Welle 7 ist als eine Vollwelle ausgebildet und drehfest mit dem ersten Lamellenträger 5 verbunden. Zum Antrieb des ersten Lamellenträgers 5 ist die Antriebseinrichtung 10 über die beiden Ausgleichskupplungen 9a, b und dem Drehmomentsensor 8 mit der ersten Welle 7 verbunden. Der Drehmomentsensor 8 ist zwischen den beiden Ausgleichskupplungen 9a, b angeordnet, wobei die beiden Ausgleichskupplungen 9a, b beispielsweise dazu dienen einen Wellenversatz in axialer und/oder radialer Richtung auszugleichen.

Ferner weist der Antriebsabschnitt zwei Wälzlager, als eine erste Lagereinrichtung 11, auf. Die beiden Wälzlager dienen zur Lagerung der ersten Welle 7 und sind axial hintereinander in Bezug auf die Drehachse D auf der ersten Welle 7 angeordnet und örtlich voneinander getrennt. Beispielsweise sind die beiden Wälzlager als Schulterkugellager ausgebildet.

Die Prüfstandanordnung 1 weist eine Messeinheit 12 zur Bestimmung eines Reibmoments der ersten Lagereinrichtung 11 auf. Die Messeinheit 12 umfasst eine Hohlmesswelle 13 und einen gehäusefesten Lagerblock 14, wobei die Hohlmesswelle 13 über ein Fluidlager 15 gelagert ist. Die Hohlmesswelle 13 ist als eine Hohlwelle ausgebildet, wobei die erste Welle 7 koaxial und/oder konzentrisch durch die Hohlwelle zumindest abschnittsweise geführt ist. Die erste Lagereinrichtung 11 stützt sich mit mindestens einem Innenring an einem Außenumfang der ersten Welle 7 und mit mindestens einem Außenring an einem Innenumfang der Hohlmesswelle 13 ab.

Zwischen dem Lagerblock 14 und der Hohlmesswelle ist ein Lagerspalt gebildet, in welchem ein Fluidfilm erzeugt ist, sodass das Fluidlager 15 gebildet ist. Bevorzugt ist das Fluidlager 15 als ein hydrostatisches oder ein aerostatisches Gleitlager ausgebildet. Der Lagerblock 14 weist in einer Grobform eine hohlzylindrische Form auf. Die Hohlmesswelle 13 weist einen Flanschabschnitt 13a und einen Zylinderabschnitt 13b auf.

Der Lagerblock 14 weist einen Aufnahmeabschnitt 16 auf, welcher beispielsweise als eine ringförmige Nut oder Vertiefung oder Ausnehmung ausgebildet ist. Der Flanschabschnitt 13a ist in dem Aufnahmeabschnitt 16 aufgenommen, wobei der Lagerspalt in radialer und/oder in axialer Richtung und/oder in Umlaufrichtung zwischen dem Aufnahmeabschnitt 16 und dem Flanschabschnitt 13a gebildet ist. Der Zylinderabschnitt 13b erstreckt sich in axialer Richtung innerhalb des Lagerblocks 14, wobei der Lagerspalt in Umlaufrichtung und/oder in axialer Richtung zwischen der radialen Außenseite der des Zylinderabschnitts 13b und einer Mantelinnenfläche des Lagerblocks 14 gebildet ist. Somit wird eine radiale und zugleich axiale Lagerung der Hohlmesswelle 13 in Bezug auf die Drehachse D ermöglicht.

Die Messeinheit 12 weist einen Hebelarm 17 und eine Sensoreinrichtung 18 auf. Der Hebelarm 17 ist mit der Hohlmesswelle 13 drehfest verbunden und stützt sich in Umlaufrichtung an der Sensoreinrichtung 18 ab, sodass eine Rotation der Hohlwelle 13 um die Drehachse D unterbunden ist. Während eines Betriebes der Prüfstandanordnung 2 wird ein Reibmoment der ersten Lagereinrichtungen 11 auf die Hohlmesswelle 13 und den Hebelarm 17 übertragen. Der Hebelarm 17 überträgt dabei in Form einer Kraftübertragung das Reibmoment auf die Sensoreinrichtung 18, wobei die Sensoreinrichtung 18 bevorzugt als ein Kraftsensor ausgebildet ist. Beispielsweise kann anschließend über eine nicht dargestellte Auswerteeinrichtung das Reibmoment anhand der erfassten Kraft ermitteltet werden.

Aufgrund der bei Drehzahl null reibungsfreien Lagerung der Hohlmesswelle 13 durch das Fluidlager 15, kann somit eine präzise Bestimmung der Lagerreibung bzw. des Reibmoments der Lagereinrichtungen 11 bestimmt werden. Somit können auch kleinere Drehmomente, beispielsweise das Schleppmoment oder das Leerlaufmoment, der Kupplungseinheit 2, insbesondere des ersten Lamellenträgers 5, präzise bestimmt werden. Hierzu kann beispielsweise das ermittelte Reibmoment von dem durch den Drehzahlsensor 8 ermittelten Antriebsmoment abgezogen werden.

Gemäß der ersten Ausführungsvariante der Prüfstandanordnung 1, welche in Figur 1 gezeigt ist, ist der zweite Lamellenträger 6 drehfest angeordnet und verbleibt während eines Betriebes stationär. Der zweite Lamellenträger 6 ist hierzu drehfest mit dem Lagerblock 14 verbunden, wobei bei dem Schließvorgang der Kupplungseinheit somit ein Bremsbetrieb simuliert wird. Ferner sind die beiden Lamellenträger 5,6 in axialer Richtung gleichgerichtet, sodass die beiden Lamellenträger 5, 6 von der gleichen Seite her zugänglich sind. Diese Anordnungsweise ist unter anderem als Single-Ended-Aufbau bekannt.

Die Betätigungsvorrichtung 4 weist einen Aktuator 19 und ein Übertragungselement 20 auf. Der Aktuator 19 ist beispielsweise als ein pneumatischer oder hydraulischer Linearantrieb ausgebildet, wobei der Aktuator 19 das Übertragungselement 20 in axialer Richtung in Bezug auf die Drehachse D verschiebt und/oder mit einer Axialkraft beaufschlagt. Das Übertragungselement 20 ist entgegen der beiden Lamellenträger 5, 6 ausgerichtet und liegt beispielsweise an dem ersten oder dem zweiten Lamellenträger 5,6 an. Bei einem Schließvorgang der Kupplungseinheit 2 werden die beiden Lamellenträger 5, 6 in axialer Richtung mit der Axialkraft beaufschlagt und zusammengepresst. Während des Schließvorgangs der Kupplungseinheit 3 kontaktiert der zweite mit dem ersten Lamellenträger 5, 6, sodass über den Reibschluss der erste Lamellenträger 5 abgebremst wird. Beispielsweise kann die Betätigungsvorrichtung 4 eine Kraft-Weg-Messdose zur Kraft- und/oder Wegmessung aufweisen, welche in axialer Richtung zwischen dem Übertragungselement 8 und dem Aktuator 7 angeordnet ist.

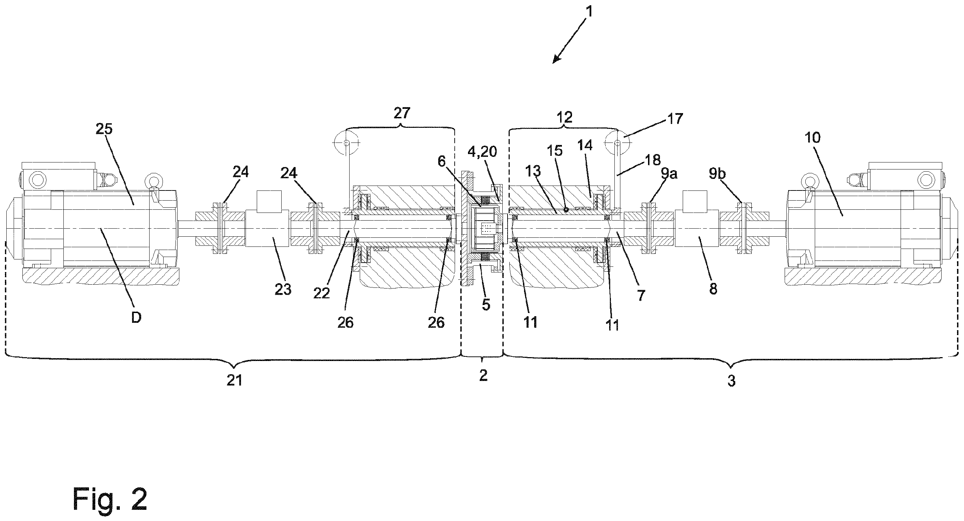

Figur 2 zeigt in einer Schnittdarstellung die Prüfstandanordnung 1 mit Kupplungsbetrieb als ein zweites Ausführungsbeispiel der Erfindung. Die Prüfstandanordnung 1 weist zusätzlich einen Abtriebsabschnitt 21 auf, wobei der Abtriebsabschnitt 21 spiegelsymmetrisch zu dem Antriebsabschnitt 3 ausgebildet ist. Der Abtriebsabschnitt 21 weist eine zweite Welle 22, einen weiteren Drehmomentsensor 23 und zwei weitere Ausgleichskupplungen 24 sowie eine Abtriebseinrichtung 25 auf. Beispielsweise ist die Abtriebseinrichtung 25 ebenfalls als ein Elektromotor ausgebildet.

Die Kupplungseinheit 2 ist in axialer Richtung zwischen dem Antriebsabschnitt 3 und dem Abtriebsabschnitt 21 angeordnet. Die beiden Lamellenträger 5, 6 sind gemäß der zweiten Ausführungsvariante gegengerichtet angeordnet, wobei die erste Welle 7 mit dem ersten Lamellenträger 5 und die zweite Welle 22 mit dem zweiten Lamellenträger 6 verbunden ist. Diese Anordnungsweise ist unter anderem als Strangaufbau bekannt. Die beiden Wellen 7, 22 erstrecken sich dabei in axialer entlang der Drehachse D und sind als Vollwellen ausgebildet. Die Abtriebseinrichtung 25 ist über die beiden weiteren Ausgleichskupplungen 24 und den weiteren Drehmomentsensor 23 mit der zweiten Welle 22 verbunden und treibt somit den zweiten Lamellenträger 6 in Umlaufrichtung um die Drehachse D an.

Die Betätigungsvorrichtung 4 weist das Übertragungselement 20 auf, welche wie bereits in der Figur 1 beschrieben zum Öffnen oder Schließen der Kupplungseinheit 2 ausgebildet ist. Beispielsweise ist die Betätigungseinrichtung 4 manuell oder über einen nicht dargestellten Aktuator betätigbar. Bei dem Schließvorgang der Kupplungseinheit 2 wird somit ein Kupplungsbetrieb simuliert, wobei die Antriebseinrichtung 10 und die Abtriebseinrichtung 25 auf die gleiche Drehzahl synchronisiert werden.

Die zweite Welle 22 ist über zwei weitere Wälzlager, als eine zweite Lagereinrichtung 26, drehbar gelagert. Zur Bestimmung des Reibmoments der zweiten Lagereinrichtung 26 weist die Prüfstandanordnung 1 eine weitere Messeinheit 27 auf, wobei die weitere Messeinheit 27 und die Messeinheit 12 baugleich bzw. funktionsgleich ausgebildet sind.

Der erste und der zweite Lamellenträger 5, 6 rotieren in einem geöffneten Zustand der Kupplungseinheit 2 im Leerlauf um die Drehachse D, wobei insbesondere das Leerlaufmoment bzw. das Schleppmoment erzeugt ist. Während des Schließvorgangs der Kupplungseinheit 3 kontaktiert der zweite mit dem ersten Lamellenträger 5, 6, sodass über den Reibschluss die beiden Lamellenträger 5, 6 auf die gleiche Drehzahl synchronisiert werden.

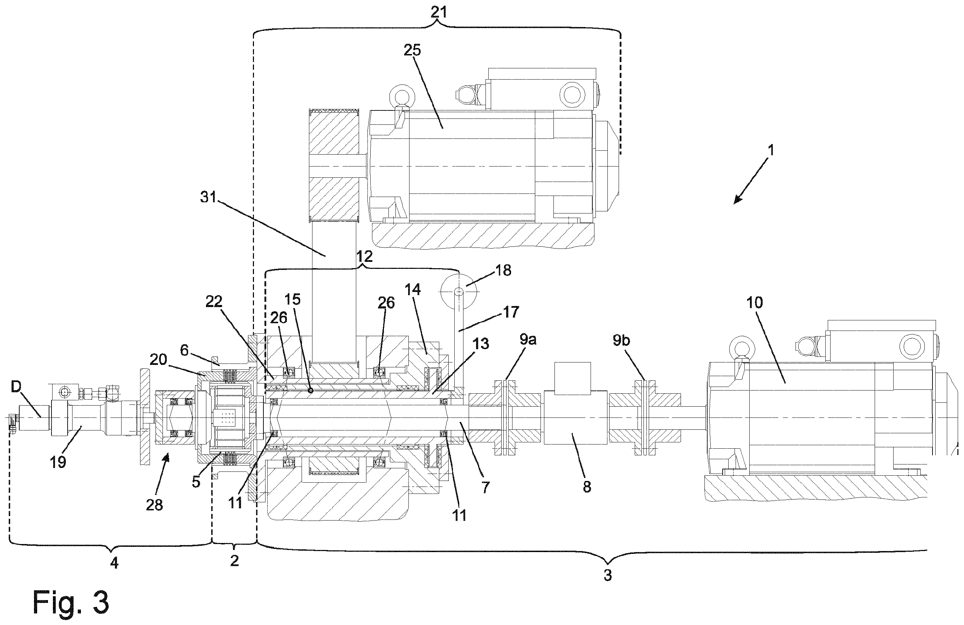

Figur 3 zeigt in einer Schnittdarstellung die Prüfstandanordnung 1 mit Kupplungsbetrieb als ein drittes Ausführungsbeispiel der Erfindung. Gemäß der dritten Ausführungsvariante sind der Antriebsabschnitt 3 und der Abtriebsabschnitt 21 auf einer gemeinsamen Seite der Kupplungseinheit 2 angeordnet. Die zweite Welle 22 ist hierzu als eine Hohlwelle ausgebildet, wobei die erste Welle 7 sowie die Messeinheit 12 koaxial und/oder konzentrisch innerhalb der zweiten Welle 22 zumindest abschnittsweise geführt sind. Die zweite Welle 22 ist dabei über die zweite Lagereinrichtung 26 separat gelagert.

Die beiden angetriebenen Wellen 7, 22 sind mit der gleichen axialen Seite an dem jeweiligen Lamellenträger 5, 6 befestigt, sodass der sogenannte Single-Ended-Aufbau bei der Prüfstandanordnung 1 realisiert wird. Der Antriebsmotor 10 ist dabei axial hinter der ersten Welle 7 und die Abtriebseinrichtung 25 achsparallel zu der der zweiten Welle 22 angeordnet. Der Abtriebsabschnitt 21 weist eine Getriebeeinrichtung 31 auf, wobei die Getriebeeinrichtung 31 als ein Riementrieb ausgebildet ist. Die als Hohlwelle ausgeführte zweite Welle 22 steht über die Getriebeeinrichtung 31 mit der Abtriebseinrichtung 25 in Verbindung.

Der den beiden Wellen 7, 22 abgewandten Seite der Lamellenträger 5, 6 ist das Übertragungselement 20 der Betätigungsvorrichtung 4 zugeordnet. Da die beiden Wellen 7, 22 mit der gleichen axialen Seite den Lamellenträgern 5, 6 zugewandt sind, steht die gegenüberliegende Seite der beiden Lamellenträger 5, 6 zur Betätigung durch den Aktuator 19 zur Verfügung.

Die Betätigungsvorrichtung 4 weist eine dritte Lagereinrichtung 28 auf, wobei die dritte Lagereinrichtung 28 zwischen dem Aktuator 19 und dem Übertragungselement 20 angeordnet ist. Beispielsweise kann die dritte Lagereinrichtung 28 als ein Axiallager oder eine Schräglager ausgebildet sein. Durch die Lagereinrichtung 28 kann somit das Übertragungselement 20 in axialer Richtung durch den Aktuator 19 bewegt werden, während das Übertragungselement 20 zugleich in Umlaufrichtung in Bezug auf die Drehachse D rotieren kann.

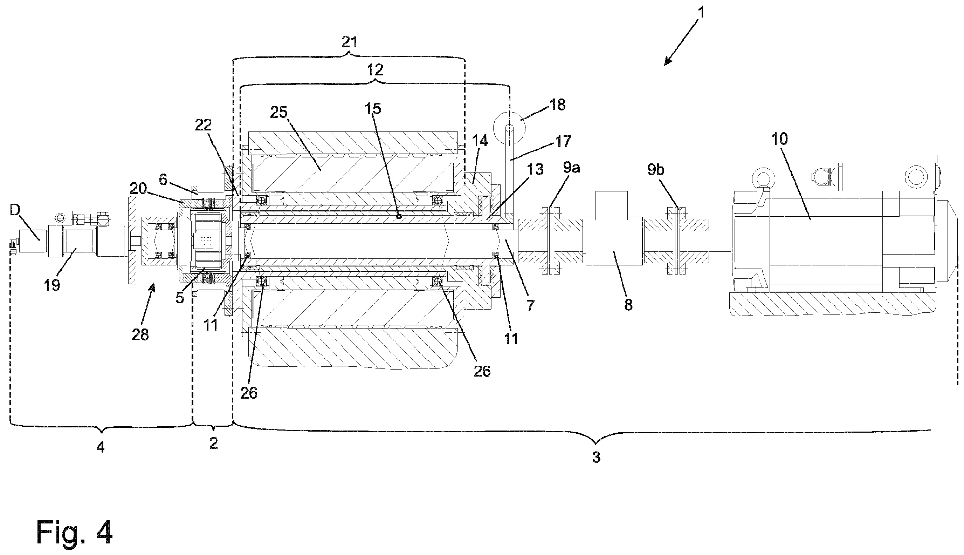

Figur 4 zeigt in ähnlicher Weise wie Figur 3 die Prüfstandanordnung 1 als ein viertes Ausführungsbeispiel der Erfindung, wobei die Abtriebseinrichtung 25 als ein Hohlwellenmotor ausgebildet ist. Die als Hohlwelle ausgebildete zweite Welle 22 dient dabei als eine Antriebshohlwelle des Hohlwellenmotors. Die Abtriebseinrichtung 25 ist koaxial in Bezug auf die Drehachse D zu der zweiten Welle 22 angeordnet, wobei die zweite Welle 22 direkt durch die Abtriebseinrichtung 25 angetrieben wird, sodass auf die in Figur 3 gezeigte Getriebeeinrichtung 31 verzichtet werden kann.

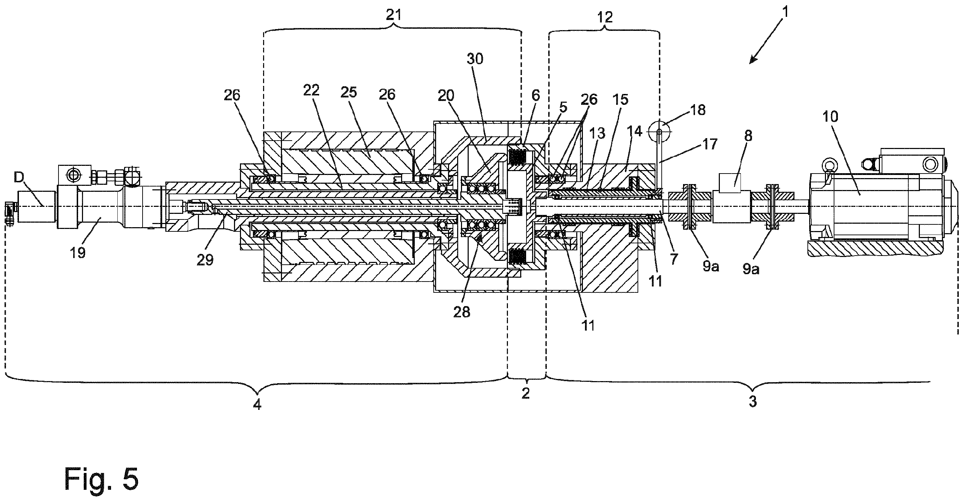

Figur 5 zeigt in einer Schnittdarstellung die Prüfstandanordnung 1 als ein fünftes Ausführungsbeispiel der Erfindung. Gemäß der fünften Ausführungsvariante ist die Kupplungseinheit 2 zwischen dem Antriebsabschnitt 21 und dem Abtriebsabschnitt 3 angeordnet. Die beiden Lamellenträger 5, 6 sind axial in Richtung des Abtriebsabschnitts 3 hin gleichgerichtet, wobei die beiden Lamellenträger 5, 6 dem Antriebsabschnitt 3 zugeordnet sind. Der erste Lamellenträger 5 ist mit der ersten Welle 7 verbunden. Der zweite Lamellenträger 6 ist separat durch die zweite Lagereinrichtung 26 gelagert, wobei sich der zweite Lamellenträger 6 über die zweite Lagereinrichtung 26 an der radialen Außenseite des Lagerblocks 14 abstützt.

Auf der der ersten Welle 7 abgewandten Seite der Lamellenträger 5, 6 ist die Betätigungsvorrichtung 4 sowie die Abtriebseinrichtung 21 zugeordnet. Die Abtriebseinrichtung 25 ist als der Hohlwellenmotor ausgebildet und koaxial in Bezug auf die Drehachse D zu der zweiten Welle 22 angeordnet. Das Übertragungselement 20 ist über eine Übertragungsstange 29 mit dem Aktuator 19 verbunden. Die Übertragungsstange 29 ist dabei durch die als Hohlwelle ausgeführte zweite Welle 22 geführt. Das Übertragungselement 20 ist dabei an einem axialen Ende der Übertragungsstange 29 angeordnet und über die dritte Lagereinrichtung 28 drehbar gelagert.

Der Abtriebsabschnitt 21 weist zum Antrieb des zweiten Lamellenträgers 6 eine Mitnahmeeinrichtung 30 auf, welche beispielsweise als ein Mitnehmer ausgebildet ist. Die Mitnahmeeinrichtung 30 ist drehfest mit der zweiten Welle 22 verbunden, wobei der zweite Lamellenträger 6 über die Mitnahmeeinrichtung 30 mit der zweiten Welle 22 koppelbar oder entkoppelbar ist.

Obwohl bei dieser Ausführungsvariante die Antriebseinrichtung 10 und die Abtriebseinrichtung 25 auf unterschiedlichen Seiten der Kupplungseinheit 2 angeordnet sind, ist die Prüfstandanordnung 1 trotzdem als ein Single-Ended-Aufbau realisiert, da die beiden Lamellenträger 5, 6 von einer Seite her zugänglich sind.

### Bezugszeichen

- 1: Prüfstandanordnung
- 2: Kupplungseinheit
- 3: Antriebsabschnitt
- 4: Betätigungsvorrichtung
- 5: erster Lamellenträger
- 6: zweiter Lamellenträger
- 7: erste Welle
- 8: Drehmomentsensor
- 9a: erste Ausgleichskupplung
- 9b: zweite Ausgleichskupplung
- 10: Antriebseinrichtung
- 11: erste Lagereinrichtung
- 12: Messeinheit
- 13: Hohlmesswelle
- 13a: Zylinderabschnitt
- 13b: Flanschabschnitt
- 14: Lagerblock
- 15: Fluidlager
- 16: Aufnahmeabschnitt
- 17: Hebelarm
- 18: Sensoreinrichtung
- 19: Aktuator
- 20: Übertragungselement
- 21: Abtriebsabschnitt
- 22: zweite Welle
- 23: weiterer Drehmomentsensor
- 24: weitere Ausgleichskupplungen
- 25: Abtriebseinrichtung
- 26: zweite Lagereinrichtung
- 27: weitere Messeinheit
- 28: dritte Lagereinrichtung
- 29: Übertragungsstange
- 30: Mitnahmeeinrichtung
- 31: Getriebeeinrichtung

- D: Drehachse

## Patentansprüche

1. Prüfstandanordnung (1) zur Prüfung einer Lamellenkupplung,
wobei die Prüfstandsanordnung (1) eine Kupplungseinheit (2) aufweist, wobei die Kupplungseinheit (2) einen ersten Lamellenträger (5) und einen zweiten Lamellenträger (6) aufweist, wobei der erste Lamellenträger (5) relativ zu dem zweiten Lamellenträger (6) bewegbar ist,
wobei die Prüfstandsanordnung (1) einen Antriebsabschnitt (3) aufweist, wobei der Antriebsabschnitt (3) eine Antriebseinrichtung (10) zur Erzeugung der Relativbewegung zwischen dem ersten und dem zweiten Lamellenträger (5, 6), eine erste angetriebene Welle (7) und mindestens eine erste Lagereinrichtung (11) zur Lagerung der ersten Welle (7) aufweist, wobei der erste Lamellenträger (5) über die erste Welle (7) antriebstechnisch mit der Antriebseinrichtung (10) verbunden ist, und wobei die erste Welle (7) durch die erste Lagereinrichtung (11) drehbar gelagert ist,
**dadurch gekennzeichnet, dass**
die Prüfstandanordnung (1) eine Messeinheit (12) zur Bestimmung eines ersten Reibmoments der ersten Lagereinrichtung (11) aufweist.

2. Prüfstandanordnung nach Anspruch 1, **dadurch gekennzeichnet, dass** die Messeinheit (12) eine Sensoreinrichtung (18) und eine koaxial zu der ersten Welle (7) angeordnete Hohlmesswelle (13) zur Übertragung des Reibmoments von der Lagereinrichtung (11) auf die Sensoreinrichtung (18) aufweist, wobei die Hohlmesswelle (13) an einer ersten radialen Seite durch die Lagereinrichtung (11) und an einer zweiten radialen Seite durch ein Fluidlager (15) gelagert ist.

3. Prüfstandanordnung (1) nach Anspruch 1 oder 2, **dadurch gekennzeichnet, dass** das Fluidlager (15) als ein hydrostatisches oder ein aerostatisches Gleitlager ausgebildet ist.

4. Prüfstandanordnung (1) nach Anspruch 2 oder 3, **dadurch gekennzeichnet, dass** die Hohlmesswelle (13) einen Hebelarm (17) aufweist, wobei sich der Hebelarm (17) in Umlaufrichtung um eine Drehachse (D) an der Sensoreinrichtung (18) abstützt, sodass eine Verdrehung der Hohlmessewelle (13) in Umlaufrichtung verhindert ist und das erste Reibmoment auf die Sensoreinrichtung (18) übertragbar ist.

5. Prüfstandanordnung (1) nach einem der vorhergehenden Ansprüche, **dadurch gekennzeichnet, dass** der zweite Lamellenträger (6) feststehend angeordnet ist, wobei bei einer Betätigung der Kupplungseinheit (2) ein Bremsbetrieb simulierbar ist.

6. Prüfstandanordnung (1) nach einem oder mehreren der Ansprüche 1 bis 4, **dadurch gekennzeichnet, dass** die Prüfstandanordnung (1) einen Abtriebsabschnitt (21) aufweist, wobei der Abtriebsabschnitt (21) eine Abtriebseinrichtung (25), eine zweite angetriebene Welle (22) und mindestens eine zweite Lagereinrichtung (26) zur Lagerung der zweiten Welle (22) aufweist, wobei der zweite Lamellenträger (6) über die zweite Welle (22) antriebstechnisch mit der Abtriebseinrichtung (21) verbunden und/oder verbindbar ist, wobei die zweite Welle (22) durch die zweite Lagereinrichtung (26) drehbar gelagert ist, und wobei bei einer Betätigung der Kupplungseinheit (2) ein Kupplungsbetrieb simulierbar ist.

7. Prüfstandanordnung (1) nach Anspruch 6, **dadurch gekennzeichnet, dass** der Antriebsabschnitt (3) und der Abtriebsabschnitt (21) in axialer Richtung hintereinander angeordnet sind, wobei die Kupplungseinheit (2) in axialer Richtung zwischen dem Antriebsabschnitt (3) und dem Abtriebsabschnitt (21) angeordnet ist.

8. Prüfstandanordnung (1) nach Anspruch 6 oder 7, **dadurch gekennzeichnet, dass** der Abtriebsabschnitt (21) eine Mitnahmeeinrichtung (30) aufweist, wobei der zweite Lamellenträger (6) über die Mitnahmeeinrichtung (30) mit der zweiten Welle (22) koppelbar oder entkoppelbar ist, wobei der erste und der zweite Lamellenträger (5, 6) dem Antriebsabschnitt (21) zugeordnet ist.

9. Prüfstandanordnung (1) nach einem oder mehreren der Ansprüche 6 bis 8, **dadurch gekennzeichnet, dass** der Antriebsabschnitt (3) und der Abtriebsabschnitt (21) in axialer Richtung auf einer gemeinsamen Seite der Kupplungseinheit (2) angeordnet sind.

10. Prüfstandanordnung (1) nach Anspruch 9, **dadurch gekennzeichnet, dass** die erste Welle (7) als eine Vollwelle und die zweite Welle (22) als eine Hohlwelle ausgebildet ist, wobei die beiden Wellen (7, 22) koaxial zueinander angeordnet sind, und wobei die Messeinheit (12) in radialer Richtung zwischen der ersten und der zweiten Welle (7, 22) angeordnet ist.

11. Prüfstandanordnung (1) nach einem der vorhergehenden Ansprüche, **dadurch gekennzeichnet, dass** die Prüfstandanordnung (1) eine Betätigungsvorrichtung (4) zur Betätigung der Kupplungseinheit (2) aufweist, wobei durch die Betätigungsvorrichtung (4) eine Kraft in axialer Richtung auf den ersten und/oder den zweiten Lamellenträger (5, 6) erzeugbar ist, sodass die Kupplungseinheit (2) betätigbar und/oder ein Lüftspiel zwischen den beiden Lamellenträgern (5, 6) einstellbar ist.

12. Prüfstandanordnung (1) nach Anspruch 11, **dadurch gekennzeichnet, dass** die Betätigungsvorrichtung (4) einen Aktuator (19), eine dritte Lagereinrichtung (28) und ein Übertragungselement (20) aufweist, wobei die dritte Lagereinrichtung (28) zwischen dem Aktuator (19) und dem Übertragungselement (20) angeordnet ist, sodass das Übertragungselement (20) in Umlaufrichtung gelagert ist.

13. Prüfstandanordnung (1) nach einem oder mehreren der Ansprüche 6 bis 12, **dadurch gekennzeichnet, dass** der Abtriebsabschnitt (21) eine Getriebeeinrichtung (31) aufweist, wobei die zweite Welle (22) über die Getriebeeinrichtung (31) antriebstechnisch mit der Abtriebseinrichtung (25) verbunden ist.

14. Prüfstandanordnung (1) nach einem oder mehreren der Ansprüche 6 bis 13, **dadurch gekennzeichnet, dass** die Abtriebseinrichtung (25) als ein Hohlwellenmotor ausgebildet ist, wobei die zweite Welle (22) als eine Antriebshohlwelle des Hohlwellenmotors ausgebildet ist.

15. Prüfstandanordnung (1) nach einem oder mehreren der Ansprüche 6 bis 14, **dadurch gekennzeichnet, dass** die Prüfstandanordnung (1) eine weitere Messeinheit (27) zur Erfassung eines zweiten Reibmoments der zweiten Lagereinrichtung (26) aufweist.

## Claims

1. Test bench arrangement (1) for testing a multiple disc clutch,
the test bench arrangement (1) having a clutch unit (2), the clutch unit (2) having a first multiple disc carrier (5) and a second multiple disc carrier (6), it being possible for the first multiple disc carrier (5) to be moved relative to the second multiple disc carrier (6), the test bench arrangement (1) having a drive section (3), the drive section (3) having a drive device (10) for the generation of the relative movement between the first and the second multiple disc carrier (5, 6), a first driven shaft (7) and at least one first bearing device (11) for mounting the first shaft (7), the first multiple disc carrier (5) being connected in drive terms to the drive device (10) via the first shaft (7), and the first shaft (7) being mounted rotatably by way of the first bearing device (11),
**characterized in that**
the test bench arrangement (1) has a measuring unit (12) for determining a first frictional moment of the first bearing device (11).

2. Test bench arrangement according to Claim 1, **characterized in that** the measuring unit (12) has a sensor device (18) and a hollow measuring shaft (13) which is arranged coaxially with respect to the first shaft (7) for the transmission of the frictional moment from the bearing device (11) to the sensor device (18), the hollow measuring shaft (13) being mounted on a first radial side by way of the bearing device (11) and on a second radial side by way of a fluid bearing (15).

3. Test bench arrangement (1) according to Claim 1 or 2, **characterized in that** the fluid bearing (15) is configured as a hydrostatic or an aerostatic plain bearing.

4. Test bench arrangement (1) according to Claim 2 or 3, **characterized in that** the hollow measuring shaft (13) has a lever arm (17), the lever arm (17) being supported on the sensor device (18) in the circulation direction about a rotational axis (D), with the result that a rotation of the hollow measuring shaft (13) in the circulation direction is prevented and the first frictional moment can be transmitted to the sensor device (18) .

5. Test bench arrangement (1) according to one of the preceding claims, **characterized in that** the second multiple disc carrier (6) is arranged in a fixed manner, it being possible for braking operation to be simulated in the case of an actuation of the clutch unit (2).

6. Test bench arrangement (1) according to one or more of Claims 1 to 4, **characterized in that** the test bench arrangement (1) has an output section (21), the output section (21) having an output device (25), a second driven shaft (22) and at least one second bearing device (26) for mounting the second shaft (22), the second multiple disc carrier (6) being connected and/or being capable of being connected in drive terms to the output device (21) via the second shaft (22), the second shaft (22) being mounted rotatably by way of the second bearing device (26), and it being possible for clutch operation to be simulated in the case of an actuation of the clutch unit (2).

7. Test bench arrangement (1) according to Claim 6, **characterized in that** the drive section (3) and the output section (21) are arranged behind one another in the axial direction, the clutch unit (2) being arranged in the axial direction between the drive section (3) and the output section (21) .

8. Test bench arrangement (1) according to Claim 6 or 7, **characterized in that** the output section (21) has a driving device (30), it being possible for the second multiple disc carrier (6) to be coupled to or decoupled from the second shaft (22) via the driving device (30), the first and the second multiple disc carrier (5, 6) being assigned to the drive section (21).

9. Test bench arrangement (1) according to one or more of Claims 6 to 8, **characterized in that** the drive section (3) and the output section (21) are arranged in the axial direction on a common side of the clutch unit (2).

10. Test bench arrangement (1) according to Claim 9, **characterized in that** the first shaft (7) is configured as a solid shaft, and the second shaft (22) is configured as a hollow shaft, the two shafts (7, 22) being arranged coaxially with respect to one another, and the measuring unit (12) being arranged in the radial direction between the first and the second shaft (7, 22).

11. Test bench arrangement (1) according to one of the preceding claims, **characterized in that** the test bench arrangement (1) has an actuating apparatus (4) for the actuation of the clutch unit (2), it being possible for a force to be generated in the axial direction on the first and/or the second multiple disc carrier (5, 6) by way of the actuating apparatus (4), with the result that the clutch unit (2) can be actuated and/or an air play between the two multiple disc carriers (5, 6) can be set.

12. Test bench arrangement (1) according to Claim 11, **characterized in that** the actuating apparatus (4) has an actuator (19), a third bearing device (28) and a transmission element (20), the third bearing device (28) being arranged between the actuator (19) and the transmission element (20), with the result that the transmission element (20) is mounted in the circulation direction.

13. Test bench arrangement (1) according to one or more of Claims 6 to 12, **characterized in that** the output section (21) has a transmission device (31), the second shaft (22) being connected in drive terms to the output device (25) via the transmission device (31).

14. Test bench arrangement (1) according to one or more of Claims 6 to 13, **characterized in that** the output device (25) is configured as a hollow shaft motor, the second shaft (22) being configured as a drive hollow shaft of the hollow shaft motor.

15. Test bench arrangement (1) according to one or more of Claims 6 to 14, **characterized in that** the test bench arrangement (1) has a further measuring unit (27) for the detection of a second frictional moment of the second bearing device (26).

## Revendications

1. Système de banc d'essai (1) pour contrôler un embrayage multidisque,
le système de banc d'essai (1) comprenant une unité d'embrayage (2), l'unité d'embrayage (2) comprenant un premier support de disques (5) et un deuxième support de disques (6), le premier support de disques (5) étant mobile par rapport au deuxième support de disques (6), le système de banc d'essai (1) comprenant une partie d'entraînement (3), la partie d'entraînement (3) comprenant un dispositif d'entraînement (10) pour produire le mouvement relatif entre le premier et le deuxième support de disques (5, 6), un premier arbre entraîné (7) et au moins un premier dispositif de palier (11) pour le montage du premier arbre (7), le premier support de disques (5) étant relié par entraînement au dispositif d'entraînement (10) par le biais du premier arbre (7), et le premier arbre (7) étant monté rotatif au moyen du premier dispositif de palier (11), **caractérisé en ce que**
le système de banc d'essai (1) comprend une unité de mesure (12) pour la détermination d'un premier couple de friction du premier dispositif de palier (11).

2. Système de banc d'essai selon la revendication 1, **caractérisé en ce que** l'unité de mesure (12) comprend un dispositif de détection (18) et un arbre de mesure creux (13) disposé coaxialement au premier arbre (7) pour le transfert du couple de friction du dispositif de palier (11) au dispositif de détection (18), l'arbre de mesure creux (13) étant monté, sur un premier côté radial, au moyen du dispositif de palier (11) et, sur un deuxième côté radial, au moyen d'un palier à fluide (15).

3. Système de banc d'essai (1) selon la revendication 1 ou 2, **caractérisé en ce que** le palier à fluide (15) est réalisé sous la forme d'un palier lisse hydrostatique ou d'un palier lisse aérostatique.

4. Système de banc d'essai (1) selon la revendication 2 ou 3, **caractérisé en ce que** l'arbre de mesure creux (13) comprend un bras de levier (17), le bras de levier (17) étant supporté sur le dispositif de détection (18) dans la direction périphérique autour d'un axe de rotation (D), de sorte qu'une rotation de l'arbre de mesure creux (13) dans la direction périphérique soit empêchée et que le premier couple de friction puisse être transféré au dispositif de détection (18).

5. Système de banc d'essai (1) selon l'une des revendications précédentes, **caractérisé en ce que** le deuxième support de disques (6) est disposé de manière fixe, un fonctionnement de freinage pouvant être simulé en cas d'actionnement de l'unité d'embrayage (2).

6. Système de banc d'essai (1) selon l'une ou plusieurs des revendications 1 à 4, **caractérisé en ce que** le système de banc d'essai (1) comprend une partie de sortie (21), la partie de sortie (21) comprenant un dispositif de sortie (25), un deuxième arbre entraîné (22) et au moins un deuxième dispositif de palier (26) pour le montage du deuxième arbre (22), le deuxième support de disques (6) étant relié et/ou pouvant être relié par entraînement au dispositif de sortie (21) par le biais du deuxième arbre (22), le deuxième arbre (22) étant monté rotatif au moyen du deuxième dispositif de palier (26), et un fonctionnement d'embrayage pouvant être simulé en cas d'actionnement de l'unité d'embrayage (2).

7. Système de banc d'essai (1) selon la revendication 6, **caractérisé en ce que** la partie d'entraînement (3) et la partie de sortie (21) sont disposées l'une derrière l'autre dans la direction axiale, l'unité d'embrayage (2) étant disposée entre la partie d'entraînement (3) et la partie de sortie (21) dans la direction axiale.

8. Système de banc d'essai (1) selon la revendication 6 ou 7, **caractérisé en ce que** la partie de sortie (21) comprend un dispositif entraîneur (30), le deuxième support de disques (6) pouvant être accouplé au deuxième arbre (22) ou pouvant être désaccouplé de celui-ci par le biais du dispositif entraîneur (30), le premier et le deuxième support de disques (5, 6) étant associés à la partie d'entraînement (21).

9. Système de banc d'essai (1) selon l'une ou plusieurs des revendications 6 à 8, **caractérisé en ce que** la partie d'entraînement (3) et la partie de sortie (21) sont disposées sur un côté commun de l'unité d'embrayage (2) dans la direction axiale.

10. Système de banc d'essai (1) selon la revendication 9, **caractérisé en ce que** le premier arbre (7) est réalisé sous la forme d'un arbre plein et le deuxième arbre (22) est réalisé sous la forme d'un arbre creux, les deux arbres (7, 22) étant disposés coaxialement l'un à l'autre, et l'unité de mesure (12) étant disposée entre le premier et le deuxième arbre (7, 22) dans la direction radiale.

11. Système de banc d'essai (1) selon l'une des revendications précédentes, **caractérisé en ce que** le système de banc d'essai (1) comprend un dispositif d'actionnement (4) pour l'actionnement de l'unité d'embrayage (2), une force pouvant être produite dans la direction axiale sur le premier et/ou le deuxième support de disques (5, 6) au moyen du dispositif d'actionnement (4), de sorte que l'unité d'embrayage (2) puisse être actionnée et/ou qu'un jeu puisse être réglé entre les deux supports de disques (5, 6).

12. Système de banc d'essai (1) selon la revendication 11, **caractérisé en ce que** le dispositif d'actionnement (4) comprend un actionneur (19), un troisième dispositif de palier (28) et un élément de transfert (20), le troisième dispositif de palier (28) étant disposé entre l'actionneur (19) et l'élément de transfert (20), de sorte que l'élément de transfert (20) soit monté dans la direction périphérique.

13. Système de banc d'essai (1) selon l'une ou plusieurs des revendications 6 à 12, **caractérisé en ce que** la partie de sortie (21) comprend un dispositif de transmission (31), le deuxième arbre (22) étant relié par entraînement au dispositif de sortie (25) par le biais du dispositif de transmission (31).

14. Système de banc d'essai (1) selon l'une ou plusieurs des revendications 6 à 13, **caractérisé en ce que** le dispositif de sortie (25) est réalisé sous la forme d'un moteur à arbre creux, le deuxième arbre (22) étant réalisé sous la forme d'un arbre creux d'entraînement du moteur à arbre creux.

15. Système de banc d'essai (1) selon l'une ou plusieurs des revendications 6 à 14, **caractérisé en ce que** le système de banc d'essai (1) comprend une autre unité de mesure (27) pour la détermination d'un deuxième couple de friction du deuxième dispositif de palier (26).
